# FASCICULE DE BREVET EUROPEEN

(11) **EP 4 416 497 B1**
(45) Date de publication et mention de la délivrance du brevet: **23.07.2025**
(21) Numéro de dépôt: 22800661.5
(22) Date de dépôt: 10.10.2022
(51) Int. Cl.: G01N 29/04, G01N 29/22, G01N 29/24, B06B 1/06

(54) **SONDE À ULTRASONS POUR INSPECTION D'UN COMPOSANT À UNE TEMPÉRATURE SUPÉRIEURE À 150°C ET PROCÉDÉ D'INSPECTION ASSOCIÉ**
ULTRASCHALLSONDE ZUR INSPEKTION EINER KOMPONENTE BEI EINER TEMPERATUR ÜBER 150 °C UND ZUGEHÖRIGES INSPEKTIONSVERFAHREN
ULTRASOUND PROBE FOR INSPECTING A COMPONENT AT A TEMPERATURE ABOVE 150°C AND ASSOCIATED INSPECTING METHOD

(30) Priorité: 11.10.2021 FR 2110736
(43) Date de publication de la demande: 21.08.2024
(73) Titulaire: FRAMATOME, 92400 Courbevoie (FR)
(72) Inventeur: SAILLANT, Jean-François, 71100 CHALON SUR SAONE (FR)
(74) Mandataire: Lavoix
(86) Numéro de dépôt international: PCT/EP2022/078143
(87) Numéro de publication internationale: WO 2023/061957

(56) Documents cités:
- CN-U- 205 691 549
- CN-U- 207 649 696

## Description

La présente invention concerne une sonde à ultrasons pour inspection d'un composant à une température supérieure à 150°C.

L'invention concerne également un procédé d'inspection du composant avec une telle sonde.

L'invention s'applique en particulier au contrôle non destructif de composants, notamment au contrôle de cordons de soudure sur ces composants.

Ces composants sont par exemple des composants de réacteur nucléaire tel qu'un générateur de vapeur, une cuve ou un conduit primaire.

Lors du remplacement d'un tel composant de réacteur nucléaire, il est nécessaire de réaliser les soudures sur site. La réalisation de ces soudures implique la mise en œuvre de moyens contraignants tels que le préchauffage des composants à une température supérieure à 150°C ou encore un chambrage local à l'azote.

De manière conventionnelle, une fois la soudure réalisée, la structure est refroidie puis elle est inspectée par méthode de contrôle non destructif ultrasonore. Si la soudure comporte des défauts, il est alors nécessaire de remettre le composant en température avant de réparer la soudure. Ceci implique une mobilisation des équipes opérationnelles sur site jusqu'à ce que la soudure soit déclarée conforme.

Il existe donc un besoin de pouvoir contrôler la soudure plus rapidement afin de gagner du temps durant l'opération de remplacement et ainsi pouvoir redémarrer le réacteur nucléaire plus rapidement.

Toutefois, les sondes connues pouvant supporter une température élevée ne présentent pas de performances acoustiques suffisantes pour pouvoir correctement contrôler une soudure.

A l'inverse, les sondes connues ayant des bonnes propriétés acoustiques ne peuvent pas résister à des températures supérieures à 150°C pendant des périodes de temps prolongées. En effet, les matériaux constituants le sabot se dégradent à de telles températures, ou leur comportement vis-à-vis du faisceau d'ultrasons est considérablement modifié quand la température augmente.

CN207649696U divulgue une sonde selon le préambule de la revendication .

Dans ce contexte, l'invention vise à proposer une sonde à ultrasons pour inspection d'un composant présentant de bonnes performances, en continu, à des températures supérieures à 150°C et ainsi permettre d'importants gains de temps durant les opérations de maintenance.

A cet effet, l'invention concerne une sonde à ultrasons pour inspection d'un composant à une température supérieure à 150°C, la sonde étant selon la revendication 1.

Ainsi, la sonde selon l'invention est propre à effectuer un contrôle de l'équipement à une température supérieure à 150°C grâce au disque de matériau piézoélectrique à basse impédance acoustique et présentant une température de Curie supérieure élevée. Une telle sonde permet de réaliser l'inspection ultrasonore d'un cordon de soudure au fur et à mesure des étapes de remplissage du cordon de soudure, alors que la structure est encore préchauffée et en atmosphère azote. Ainsi, il est possible de réparer au plus tôt un défaut de soudure et donc de gagner un temps considérable sur le chantier de remplacement ainsi que de réduire considérablement les aléas.

La sonde peut comprendre l'une ou plusieurs caractéristiques définies dans les revendications dépendantes.

L'invention concerne également un procédé d'inspection d'un composant à une température supérieure à 150°C au moyen d'au moins une sonde telle que définie ci-dessus, le procédé comprenant au moins les étapes suivantes :
- mise en contact du sabot avec le composant à inspecter ;
- émission d'un faisceau d'ultrasons en direction du sabot par le traducteur, le faisceau étant au moins en partie transmis par le sabot vers le composant.

Avantageusement, le composant comprenant un cordon de soudure en cours de réalisation, le procédé comprenant en outre la fourniture de deux sondes selon l'une quelconque des revendications précédentes et la disposition de chacune des sondes de part et d'autre du cordon de soudure en cours de réalisation.

L'invention sera mieux comprise à la lecture de la description qui suit, donnée uniquement à titre d'exemple, et faite en se référant aux dessins annexés, sur lesquels :
- **[****Fig 1****]** la figure 1 est une représentation schématique de côté d'une sonde à ultrasons selon l'invention, disposée sur un composant à inspecter et comprenant un traducteur ultrasonore et un sabot ;
- **[****Fig 2****]** la figure 2 est une vue en coupe du traducteur ultrasonore de la Figure 1 ; et
- **[****Fig 3****]** la figure 3 est une représentation schématique de côté de deux sondes selon l'invention de part et d'autre d'un cordon de soudure à inspecter.

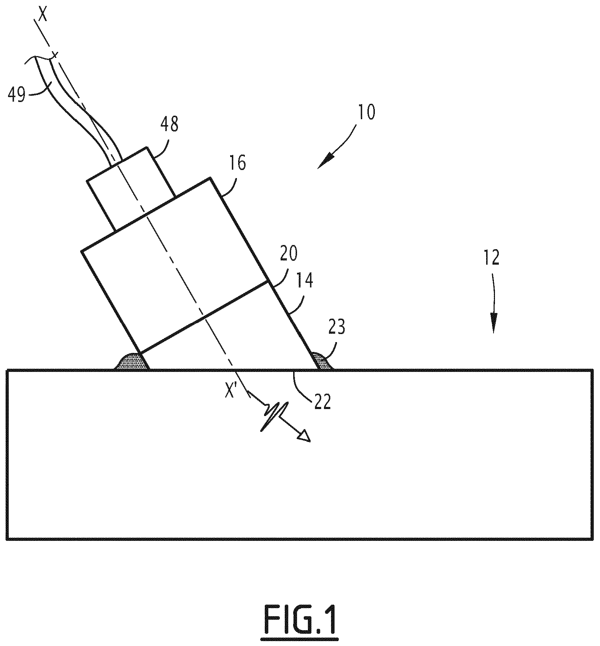

Une sonde à ultrasons 10 est représentée sur la Figure 1.

La sonde 10 est destinée à l'inspection de composants 12, notamment métalliques, comme par exemple des composants de réacteurs nucléaires, par ultrasons. La sonde 10 permet de détecter des défauts dans ces composants, et notamment dans les cordons de soudure. Ces défauts sont par exemple des cavités, des fissures ou des défauts de mouillages. Les composants inspectés sont par exemple en acier inoxydable, en acier ferritique, en Inconel, etc...

Comme visible sur les Figures, la sonde 10 s'étend selon un axe principal X-X'.

La sonde 10 comprend un sabot 14 et un traducteur ultrasonore 16.

Le sabot 14 et le traducteur 16 sont avantageusement vissés entre eux.

Le sabot 14 et le traducteur 16 sont couplés acoustiquement l'un à l'autre par l'intermédiaire d'une fine couche de liquide ou gel résistant à haute température.

En variante, le sabot 14 et le traducteur 16 sont collés l'un contre l'autre par l'intermédiaire d'une fine couche de résine époxy haute température.

Ce sabot 14 est propre à être mis en contact avec le composant 12 à inspecter.

Le sabot 14 est avantageusement en polybenzimidazole.

Cette classe de polymères est particulièrement adaptée pour la réalisation du sabot 14. En effet, ces matériaux sont particulièrement résistants à de hautes températures, jusqu'à 150°C et même jusqu'à 427°C. Ils ne se dégradent pas à 150°C et même jusqu'à 427°C. Par ailleurs, l'atténuation du faisceau d'ultrasons n'augmente que faiblement avec la température dans cette classe de matériaux.

Comme visible sur la Figure 1, le sabot 14 comprend une surface d'entrée 20 et une surface de sortie 22.

La surface de sortie 22 est propre être en contact direct avec le composant 12.

La surface de sortie 22 du sabot et le composant 12 sont mis en contact l'une avec l'autre par l'intermédiaire d'une fine couche 23 de liquide ou gel couplant résistant à haute température.

La surface d'entrée 20 est en contact avec le traducteur ultrasonore 16.

Comme visible sur la Figure 1, la surface d'entrée 20 et la surface de sortie 22 forment l'une avec l'autre un angle supérieur à 10°, avantageusement supérieur à 20°.

Les surfaces d'entrée 20 et de sortie 22 sont agencées pour que le faisceau d'ultrasons émis par le traducteur ultrasonore 16 pénètre dans le sabot 14 par la surface d'entrée 20 et sorte du sabot 14 par la surface de sortie 22.

Le traducteur 16 est configuré pour émettre un faisceau d'ultrasons en direction du sabot 14.

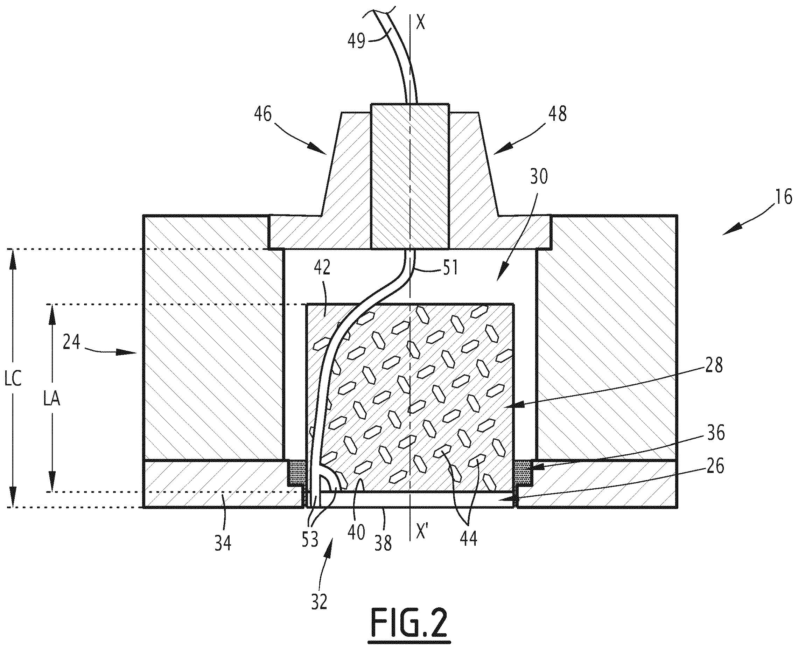

En référence à la figure 2, le traducteur 16 comprend un corps de sonde 24, un disque 26 et un amortisseur 28.

Le corps de sonde 24 comprend des parois externes, notamment métalliques. Le corps de sonde 24 présente une forme sensiblement parallélépipédique. En variante, le corps de sonde 24 présente une forme par exemple cylindrique.

Le corps de sonde 24 définit un volume interne 30 présentant une longueur de corps LC selon l'axe principal X-X'. Le corps de sonde 24 définit une ouverture 32 vers ce volume interne 30.

Le corps de sonde 24 comprend avantageusement une bague 34 arrangée dans l'ouverture 32 et apte à être en contact avec le sabot 14.

La bague 34 est scellée au disque 26 et à l'amortisseur 28, via un scellement 36. Le scellement 36 s'étend avantageusement sur une hauteur comprise entre 1 mm et 3 mm selon l'axe principal X-X', pour un diamètre de disque 26 compris entre 3 mm et 30 mm.

Le disque 26 est disposé dans l'ouverture 32.

Le disque 26 est composé d'un matériau piézoélectrique. Le disque 26 est configuré pour agir comme émetteur d'ultrasons et transmettre des ondes ultrasonores en direction du sabot 14. Le disque 26 est un transducteur, susceptible de générer et de capter des ultrasons. Il peut ainsi être utilisé en émetteur ou en récepteur d'ultrasons.

Le disque 26 présente une impédance acoustique comprise entre 7 MRayl et 25 MRayl, de préférence comprise entre 10 MRayl et 25 MRayl.

L'impédance acoustique du disque 26 est obtenue en multipliant la masse volumique du matériau piézoélectrique formant le disque par sa vitesse de propagation du son. L'impédance d'une céramique piézoélectrique varie légèrement en fonction de la température. Toutefois, cette impédance reste basse à 150°C, notamment inférieure à 25 MRayl.

L'impédance acoustique d'un milieu pour une onde acoustique caractérise la résistance du milieu au passage de cette onde. Il est rappelé que 1 Rayl est égal à 1 Pa.s/m.

Le disque 26 présente une température de Curie supérieure à 250 °C.

La température de Curie d'un matériau ferroélectrique est la température à laquelle le matériau perd sa polarisation rémanente.

Le disque 26 est par exemple composé d'un composite de PZT (titano-zirconates de plomb) et d'air.

Le disque 26 présente une face avant 38 et une face arrière 40.

La face avant 38 est configurée pour être en contact avec le sabot 14. En particulier, le disque 26 et le sabot 14 sont en contact direct.

Ainsi, la sonde 10 est dépourvue de lame d'adaptation acoustique disposée entre le disque 26 et le sabot 14, contrairement aux traducteurs conventionnels. Les contraintes générées par une lame d'adaptation sont telles qu'elles feraient bomber le disque 26 piézoélectrique et empêcheraient de réaliser un contact plan avec le sabot 14 sur la face avant 38. Dans la présente invention, le disque 26 en matériau piézoélectrique à basse impédance acoustique permet d'éviter une telle adaptation acoustique en face avant 38.

Comme visible sur la Figure 2, l'amortisseur 28 est fixé sur la face arrière 40 du disque 26.

L'amortisseur 28 s'étend depuis la face arrière 40 dans le volume interne 30 selon l'axe principal X-X' sur une longueur d'amortisseur LA inférieure à la longueur de corps LC.

L'amortisseur 28 est partiellement scellé via la bague 34. Ainsi, une partie de l'amortisseur 28 fait saillie librement hors de la bague 34 dans le volume interne 30. L'amortisseur 28 se dilatant de manière importante, le scellement partiel de l'amortisseur 28 avec le corps de sonde 24 permet d'éviter le risque que le gonflement de l'amortisseur 28 fasse exploser le disque 26 piézoélectrique.

L'amortisseur 28 comprend du silicone 42 et des particules 44 dispersées dans le silicone 42. Les particules 44 permettant de diffuser l'onde envoyée vers l'arrière de la sonde 10 par le disque 26.

Chaque particule 44 est notamment composée de tungstène ou d'alumine.

Chaque particule 44 présente une dimension transversale comprise entre 10 µm et 250 µm.

L'amortisseur 28 présente un coefficient de dilatation environ cent fois plus élevé que celui du disque 26.

En référence à la figure 2, le traducteur 16 comprend en outre un capot arrière 46 et un connecteur électrique 48.

Le capot arrière 46 est fixé sur la face du corps de sonde 24 opposée à l'ouverture 32.

Le connecteur électrique 48 est arrangé dans le capot arrière 46. Le connecteur électrique 48 est relié via un câble électrique 49 à un poste électronique de pilotage de contrôle non destructif (CND) par ultrasons (non représentée) et est ainsi configuré pour transmettre les signaux électriques émis et reçus au disque 26 via une ligne de transmission 51. La ligne de transmission est un câble coaxial capable de résister à une température supérieure à 250°C.

Le disque 26 comporte une électrode 53 sur chaque face 38, 40. L'une des électrodes 53 est connectée à la masse et l'autre à l'âme du câble coaxial. L'électrode 53 du côté de la face avant 38 remonte sur la tranche latéral du disque 26 afin de permettre un retour d'électrode 53 et de pouvoir braser un fil depuis la face arrière 40 du disque 26.

La connexion électrique entre les deux électrodes 53 du disque 26 et le câble coaxial est réalisée avec de la brasure ayant un point de fusion supérieur à 250°C par un ou plusieurs points. Cette répétition permet de fiabiliser la sonde en cas de rupture d'une des connexions.

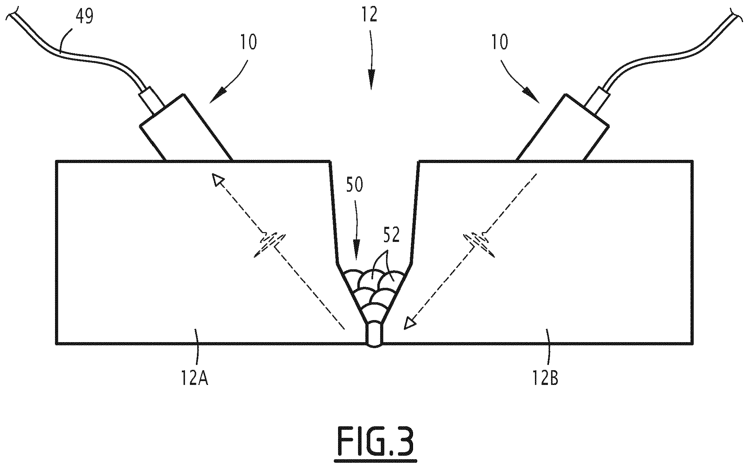

Un procédé d'inspection d'un composant 12 selon l'invention au moyen d'une telle sonde 10 va désormais être expliqué, en référence à la Figure 3.

Le composant 12 est par un exemple un composant de réacteur nucléaire.

Le composant 12 est chauffé à une température supérieure à 150°C avant la réalisation du soudage.

Dans l'exemple représenté ici, deux sondes 10 sont utilisées pour contrôler l'intégrité d'un cordon de soudure 50 en cours de réalisation. Le cordon de soudure 50 vise à solidariser deux parties 12A, 12B du composant 12 à contrôler. Le cordon de soudure 50 remplit une rainure ménagée entre les deux parties 12A, 12B. Le cordon de soudure est réalisé en plusieurs passes, une couche 52 de matière d'apport étant déposée dans la rainure à chaque passe. Les couches 52 sont superposées les unes aux autres.

Comme visible sur la Figure 3, les deux sondes 10 sont disposées de part et d'autre du cordon de soudure 50. Une première sonde 10 est ainsi disposée sur la première partie 12A du composant 12 et une deuxième sonde 10 est disposée sur la deuxième partie 12B du composant 12.

Pour réaliser le contrôle du cordon de soudure 50, le sabot 14 de chaque sonde 10 est posée contre la surface externe du composant 12, à distance du cordon de soudure 50 à contrôler. Cette distance est choisie pour que le faisceau d'ultrasons transmis soit dirigé vers la zone à contrôler. Du fait que l'angle entre le faisceau d'ultrasons transmis et la normale à la surface est relativement constant et indépendant de la température Du composant 12 au moment du contrôle, il est facile de déterminer la distance permettant de diriger le faisceau transmis sur le cordon de soudure 50 à contrôler.

Puis, le traducteur 16 est activé et émet un faisceau d'ultrasons en direction du sabot 14. Le faisceau d'ultrasons incident pénètre dans le sabot 14 par la surface d'entrée 20, se propage à l'intérieur du sabot 14 et sort par la surface de sortie 22. Il se divise alors en un faisceau transmis et un faisceau réfléchi. Le faisceau transmis pénètre dans le composant 12.

Après avoir frappé le cordon de soudure 50, le faisceau d'ultrasons est réfléchi et son écho revient jusqu'à la sonde 10, comme illustré sur la figure 3. Cet écho est enregistré et interprété.

Ainsi, la sonde 10 selon l'invention permet donc un contrôle d'un composant à une température supérieure à 150°C, grâce à sa conception reposant sur un choix des matériaux adaptés et sur une architecture permettant la réduction des contraintes thermomécaniques aux différentes interfaces.

Il est alors possible de réaliser l'inspection ultrasonore du cordon de soudure 50 au fur et à mesure des étapes de remplissage du cordon de soudure 50, alors que le composant 12 est préchauffé et en atmosphère azote.

Ainsi, il est possible de réparer au plus tôt un défaut de soudure et donc de gagner un temps considérable sur le chantier de remplacement ainsi que de réduire considérablement les aléas.

## Revendications

1. Sonde (10) à ultrasons pour inspection d'un composant (12) à une température supérieure à 150°C, la sonde (10) s'étendant selon un axe principal (X-X') et comprenant :
- un sabot (14) propre à être mis en contact avec le composant (12) à inspecter, et
- un traducteur (16) ultrasonore fixé au sabot (14) et configuré pour émettre un faisceau d'ultrasons en direction du sabot (14), le traducteur (16) comportant :
+ un corps de sonde (24) définissant un volume interne (30) présentant une longueur de corps (LC) selon l'axe principal (X-X'), le corps de sonde (24) définissant en outre une ouverture (32) vers le volume interne (30) ;
+ un disque (26) de matériau piézoélectrique disposé dans l'ouverture (32), le disque (26) présentant une face avant (38) et une face arrière (40), la face avant (38) étant configurée pour être en contact avec le sabot (14) ;
+ un amortisseur (28) ;
**caractérisée en ce que** le disque (26) présente une impédance acoustique comprise entre 7 MRayl et 25 MRayl et une température de Curie supérieure à 250 °C et **en ce que** l'amortisseur (28) est fixé sur la face arrière (40) du disque (26) et s'étend depuis la face arrière (40) dans le volume interne (30) selon l'axe principal (X-X') sur une longueur d'amortisseur (LA) inférieure à la longueur de corps (LC).

2. Sonde (10) selon la revendication 1, dans laquelle l'amortisseur (28) comprend du silicone (42) et des particules (44) dispersées dans le silicone (42).

3. Sonde (10) selon la revendication 2, dans laquelle chaque particule (44) présente une dimension transversale comprise entre 10 µm et 250 µm.

4. Sonde (10) selon l'une quelconque des revendications précédentes, dans laquelle le corps de sonde (24) comprend une bague (34) arrangée dans l'ouverture (32), la bague (34) étant scellée au disque (26) et à l'amortisseur (28) via un scellement (36), le scellement (36) s'étendant sur une hauteur comprise entre 1 mm et 3 mm selon l'axe principal (X-X'), une partie de l'amortisseur (28) faisant saillie hors de la bague (34) dans le volume interne (30).

5. Sonde (10) selon l'une quelconque des revendications précédentes, dans laquelle le sabot (14) est en polybenzimidazole.

6. Sonde (10) selon l'une quelconque des revendications précédentes, dans laquelle le sabot (14) comprend une surface d'entrée (20) en contact avec le disque (26) du traducteur (16) et une surface de sortie (22) propre à être mis en contact direct avec le composant (12) à inspecter, la surface d'entrée (20) et la surface de sortie (22) formant l'une avec l'autre un angle supérieur à 10°.

7. Sonde (10) selon l'une quelconque des revendications précédentes, dans laquelle le disque (26) et le sabot (14) sont en contact direct, la sonde (10) étant dépourvue de lame d'adaptation acoustique disposée entre le disque (26) et le sabot (14).

8. Sonde (10) selon l'une quelconque des revendications précédentes, dans laquelle la sonde (10) comprend un connecteur électrique (48) arrangé dans le traducteur (16) et configuré pour alimenter le disque (26) en électricité.

9. Procédé d'inspection d'un composant (12) à une température supérieure à 150°C au moyen d'au moins une sonde (10) selon l'une quelconque des revendications précédentes, le procédé comprenant au moins les étapes suivantes :
- mise en contact du sabot (14) avec le composant (12) à inspecter ;
- émission d'un faisceau d'ultrasons en direction du sabot (12) par le traducteur (16), le faisceau étant au moins en partie transmis par le sabot (14) vers le composant (12).

10. Procédé d'inspection selon la revendication 9, le composant (12) comprenant un cordon de soudure (50) en cours de réalisation, le procédé comprenant en outre la fourniture de deux sondes (10) selon l'une quelconque des revendications précédentes et la disposition de chacune des sondes (10) de part et d'autre du cordon de soudure (50) en cours de réalisation.

## Patentansprüche

1. Ultraschallsonde (10) zur Inspektion einer Komponente (12) bei einer Temperatur von mehr als 150 °C, wobei sich die Sonde (10) entlang einer Hauptachse (X-X') erstreckt und umfassend:
- einen Schuh (14), der geeignet ist, um mit der zu inspizierenden Komponente (12) in Kontakt gebracht zu werden, und
- einen Ultraschallwandler (16), der an dem Schuh (14) befestigt und konfiguriert ist, um einen Ultraschallstrahl in Richtung des Schuhs (14) zu emittieren, der Wandler (16) umfassend:
+ einen Sondenkörper (24), der ein Innenvolumen (30) definiert, das eine Körperlänge (LC) entlang der Hauptachse (X-X') aufweist, wobei der Sondenkörper (24) ferner eine Öffnung (32) zu dem Innenvolumen (30) definiert;
+ eine Scheibe (26) aus piezoelektrischem Material, die in der Öffnung (32) angeordnet ist, wobei die Scheibe (26) eine Vorderseite (38) und eine Rückseite (40) aufweist, wobei die Vorderseite (38) konfiguriert ist, um mit dem Schuh (14) in Kontakt zu kommen;
+ einen Dämpfer (28);
**dadurch gekennzeichnet, dass** die Scheibe (26) eine akustische Impedanz zwischen 7 MRayl und 25 MRayl und eine Curie-Temperatur von mehr als 250 °C aufweist und dass der Dämpfer (28) an der Rückseite (40) der Scheibe (26) befestigt ist und sich von der Rückseite (40) entlang der Hauptachse (X-X') über eine Dämpferlänge (LA), die kleiner als die Körperlänge (LC) ist, in das Innenvolumen (30) erstreckt.

2. Sonde (10) nach Anspruch 1, wobei der Dämpfer (28) Silikon (42) und in dem Silikon (42) dispergierte Partikel (44) umfasst.

3. Sonde (10) nach Anspruch 2, wobei jedes Partikel (44) eine Querschnittsabmessung zwischen 10 µm und 250 µm aufweist.

4. Sonde (10) nach einem der vorherigen Ansprüche, wobei der Sondenkörper (24) einen Ring (34) umfasst, der in der Öffnung (32) angeordnet ist, wobei der Ring (34) über eine Versiegelung (36) mit der Scheibe (26) und dem Dämpfer (28) versiegelt ist, wobei sich die Versiegelung (36) über eine Höhe zwischen 1 mm und 3 mm entlang der Hauptachse (X-X') erstreckt, wobei ein Teil des Dämpfers (28) aus dem Ring (34) in das Innenvolumen (30) hervorsteht.

5. Sonde (10) nach einem der vorherigen Ansprüche, wobei der Schuh (14) aus Polybenzimidazol ist.

6. Sonde (10) nach einem der vorherigen Ansprüche, wobei der Schuh (14) eine Eingangsfläche (20), die mit der Scheibe (26) des Wandlers (16) in Kontakt ist, und eine Ausgangsfläche (22) aufweist, die geeignet ist, in direkten Kontakt mit der zu inspizierenden Komponente (12) gebracht zu werden, wobei die Eingangsfläche (20) und die Ausgangsfläche (22) miteinander einen Winkel von mehr als 10° bilden.

7. Sonde (10) nach einem der vorherigen Ansprüche, wobei die Scheibe (26) und der Schuh (14) in direktem Kontakt sind, wobei die Sonde (10) keine akustische Anpassungsplatte aufweist, die zwischen der Scheibe (26) und dem Schuh (14) angeordnet ist.

8. Sonde (10) nach einem der vorherigen Ansprüche, wobei die Sonde (10) einen elektrischen Verbinder (48) umfasst, der in dem Wandler (16) angeordnet und konfiguriert ist, um die Scheibe (26) mit Strom zu versorgen.

9. Verfahren zum Inspizieren einer Komponente (12) bei einer Temperatur von mehr als 150 °C mittels mindestens einer Sonde (10) nach einem der vorherigen Ansprüche, das Verfahren mindestens umfassend die folgenden Schritte:
- Inkontaktbringen des Schuhs (14) mit der zu inspizierenden Komponente (12);
- Emittieren eines Ultraschallstrahls in Richtung des Schuhs (12) durch den Wandler (16), wobei der Strahl zumindest teilweise durch den Schuh (14) zu der Komponente (12) übertragen wird.

10. Inspektionsverfahren nach Anspruch 9, wobei die Komponente (12) eine Schweißnaht (50) umfasst, die gerade hergestellt wird, wobei das Verfahren ferner das Bereitstellen von zwei Sonden (10) nach einem der vorherigen Ansprüche und das Anordnen jeder der Sonden (10) auf beiden Seiten der Schweißnaht (50), die gerade hergestellt wird, umfasst.

## Claims

1. An ultrasound probe (10) for inspecting a component (12) at a temperature above 150°C, the probe (10) extending along a major axis (X-X') and comprising:
- a shoe (14) suitable for being brought into contact with the component (12) to be inspected, and
- an ultrasonic transducer (16) attached to the shoe (14) and configured to emit an ultrasonic beam towards the shoe (14), the transducer (16) including:
+ a probe body (24) defining an internal volume (30) having a body length (LC) along the main axis (X-X'), the probe body (24) further defining an aperture (32) towards the internal volume (30);
+ a disk (26) of piezoelectric material arranged in the aperture (32), the disk (26) having a front side (38) and a back side (40), the front side (38) being configured to be in contact with the shoe (14);
+ a damper (28);
**characterized .in that** the disk (26) having an acoustic impedance comprised between 7 MRayl and 25 MRayl and a Curie temperature greater than 250 °C and **in that** the damper (28) is attached to the back side (40) of the disk (26) and extending from the back side (40) into the internal volume (30) along the main axis (X-X') over a damper length (LA) shorter than the body length (LC).

2. The probe (10) according to claim 1, wherein the damper (28) comprises silicone (42) and particles (44) dispersed in the silicone (42).

3. The probe (10) according to claim 2, wherein each particle (44) has a transverse dimension comprised between 10 µm and 250 µm.

4. The probe (10) according to any of the preceding claims, wherein the probe body (24) comprises a ring (34) arranged in the aperture (32), the ring (34) being sealed to the disk (26) and the damper (28) via a seal (36), the seal (36) extending over a height comprised between 1 mm and 3 mm along the main axis (X-X'), a part of the damper (28) protruding out of the ring (34) into the internal volume (30).

5. The probe (10) according to any of the preceding claims, wherein the shoe (14) is made of polybenzimidazole.

6. The probe (10) according to any of the preceding claims, wherein the shoe (14) comprises an entry surface (20) in contact with the disk (26) of the transducer (16) and an exit surface (22) suitable for being brought in direct contact with the component (12) to be inspected, the entry surface (20) and the exit surface (22) forming an angle greater than 10° with each other.

7. The probe (10) according to any of the preceding claims, wherein the disk (26) and the shoe (14) are in direct contact, the probe (10) having no acoustic matching layer arranged between the disk (26) and the shoe (14).

8. The probe (10) according to any of the preceding claims, wherein the probe (10) comprises an electrical connector (48) arranged in the transducer (16) and configured to supply electricity to the disk (26).

9. A method for inspecting a component (12) at a temperature above 150°C using at least one probe (10) according to any of the preceding claims, the method comprising at least the following steps:
- bringing the shoe (14) into contact with the component (12) to be inspected;
- emission, by the transducer (16), of an ultrasound beam toward the shoe (12), the beam being at least partially transmitted by the shoe (14) to the component (12).

10. The inspection method according to claim 9, the component (12) comprising a weld bead (50) which is being produced, the method further comprising providing two probes (10) according to any of the preceding claims and the arrangement of each of the probes (10) on both sides of the weld bead (50) being produced.
